# EUROPÄISCHE PATENTANMELDUNG

(11) **EP 0 685 358 A1**
(43) Veröffentlichungstag der Anmeldung: **06.12.1995**
(21) Anmeldenummer: 95810308.7
(22) Anmeldetag: 09.05.1995
(51) Int. Cl.: B60N 2/06

(54) **Spielfreie Längsführung**

(30) Priorität: 31.05.1994 CH 1684/94
(71) Anmelder: Alusuisse-Lonza Services AG, CH-8212 Neuhausen am Rheinfall (CH)
(72) Erfinder: Graf, Werner, D-78234 Engen (DE); Frank, Simon, D-78250 Tengen (DE); Baumann, Karl, D-78247 Hilzingen (DE)

(57) **Zusammenfassung**

Spielfreie Längsführung aus ineinanergeführten Schienen aus einer Unterschiene und einer gegen diese verschiebbaren Oberschiene für die Verwendung zur Sitzbefestigung in Fahrzeugen, wie Personenkraftwagen. Bei der spielfreien Längsführung weist die Unterschiene längslaufende Wandteile auf, die zu einer Führungsrille ausgeformt sind, und die Oberschiene weist den Wandteilen der Unterschiene parallel laufende Wandteile auf, die zu einer Führungsrille ausgeformt sind, und die Führungsrillen der Unterschiene und der Oberschiene liegen einander gegenüber und bilden eine Gleitführung. In der Gleitführung sind Gleitelemente angeordnet, die in Ruhelage einen grösseren Querschnitt als in Einbaulage aufweisen und die Gleitelemente führen die Unterschiene und die Oberschiene spielfrei.

## Beschreibung

Vorliegende Erfindung betrifft eine spielfreie Längsführung aus ineinanergeführten Schienen aus einer Unterschiene und einer gegen diese verschiebbaren Oberschiene und die Verwendung der spielfreien Längsführung.

Längsführungen von zwei gegeneinander verschiebbaren und ineinander geführten Schienen sind beispielsweise bekannt zum Verschieben von Geräten oder Vorrichtungen. Grosse Bedeutung haben solche Längsführungen als Längsverstellvorrichtungen von Fahrzeugsitzen, beispielsweise in einem Kraftfahrzeug. Längsführungen für Längsverstellvorrichtungen von Fahrzeugsitzen aus einander zugeordneten Schienen, von denen wenigstens eine ein Profil mit angenähert U-förmigem Querschnitt aufweist, sind beispielsweise aus der DE-PS 31 22 124 bekannt. Eine der Schienen ist eine ortsfeste Führungsschiene und mittels zwischengeordneter Rollkörper ist die Gleitschiene in Längsrichtung beweglich gelagert. Weiters bilden in Längsstegen laufende Kugeln zumindest zwei weitere Längsführungen aus.

Aus der EP 0 130 275 sind Längsführungen für insbesondere für die motorgetriebene Längsverstellung von Fahrzeugsitzen bekannt geworden, wobei zwei längliche gegeneinander verschiebbare und ineinander geführte Schienen über zwei Reihen Wälzkörper, insbesondere Kugeln, miteinander in Verbindung stehen und unter Verspannung aneinander anliegen.

In der Praxis haben sich zwei Ausführungsformen von gegeneinander verschiebbaren Längsführungen für Fahrzeugsitze durchgesetzt. Für mechanisch verstellbare Fahrzeugsitze haben sich Längsführungen mit einem gewissen Spiel, welches ein leichtes Gleiten ermöglicht, durchgesetzt, während bei elektromotorischem Antrieb eine spielfreie Paarung, welche sich nur mit hohem Kraftaufwand gegeneinander bewegen lässt, zur Anwendung gelangt. Der hohe Kraftaufwand lässt sich durch den elektrischen Antrieb leicht überwinden, währenddem die Spielfreiheit beim Betrieb des Fahrzeuges unerwünschte Geräusche vermeidet. Paarungen von Längsführungen mit geringem Spiel neigen leicht zu störenden Geräuschen während dem Betrieb des Fahrzeuges und erwecken den Eindruck von unsolider Machart.

Aufgabe vorliegender Erfindung war es, eine spielfreie Längsführung aus einer Unterschiene und einer gegen diese verschiebbare Oberschiene vorzuschlagen, wobei die Längsführungen, in belastetem und unbelastetem Zustand, eingebaut in einem Kraftfahrzeug beim Betrieb desselben geräuschfrei bleiben.

Erfindungsgemäss wird dies dadurch gelöst, dass die Unterschiene längslaufende Wandteile aufweist die zu einer Führungsrille ausgeformt sind und die Oberschiene den Wandteilen der Unterschiene parallel laufende Wandteile aufweist, die zu einer Führungsrille ausgeformt sind und die Führungsrillen der Unterschiene und der Oberschiene einander gegenüberliegen und eine Gleitführung bilden und in der Gleitführung Gleitelemente angeordnet sind, die in Ruhelage einen grösseren Querschnitt als in Einbaulage aufweisen und die Gleitelemente die Unterschiene und die Oberschiene spielfrei führen.

Die spielfreie Längsführung nach vorliegender Erfindung kann beispielsweise eine Unterschiene rechteckigen bis quadratischen äusseren Querschnittes aufweisen, die von einer U-förmigen Oberschiene oben und seitlich umgriffen wird. Die Unterschiene kann z.B. auch U-förmig sein und eine Oberschiene mit rechteckig bis quadratischen Querschnittes kann im U-förmigen Profilquerschnitt angeordnet sein. In anderer Ausführungsform kann die Unterals auch die Oberschiene einen U-förmigen Querschnitt aufweisen und die beiden Schienen können ineinander geführt sein. Die Oberschiene kann auch den Querschnitt eines auf den Kopf gestellten Y oder T aufweisen und der Kopf des Y oder T wird im C-förmigen Querschnitt der Unterschiene geführt. Die Querschnitte der Unterschiene und der Oberschiene können im wesentlichen auch Dreieckgestalt aufweisen, wobei die Unterschiene eine Rinne bildet in der die Oberschiene geführt ist.

Die Gleitelemente können die Aufgabe des gegenseitigen Tragens und Führens der Schienen bei der erfindungsgemässen Längsführung allein erfüllen. Die Oberschiene und die damit verbundenen Bauteile und Lasten stützen sich somit allein über die Gleitelemente auf der Unterschiene ab. Die Gleitelemente übernehmen dann die spielfreie Führung und die tragende Funktion. Die Gleitelemente können auch nur die spielfreie Führung von Oberschiene und Unterschiene übernehmen, während Wälzkörper die tragende Funktion übernehmen. Fener ist es möglich, dass Wälzkörper einen Teil der tragenden Funktion und die Gleitelemente die führende und den Rest der tragenden Funktion übernehmen.

In einer möglichen Ausführungsform weist die Unterschiene einen C-förmigen Querschnitt auf, wobei der Längsschlitz der Unterschiene nach oben gerichtet ist und durch zwei Firststreifen begrenzt ist. In der Unterschiene C-förmigen Querschnittes ist die Oberschiene mit beispielsweise einem im wesentlichen rechteckigen Querschnitt oder U-förmigen Ouerschnitt angeordnet. Die Oberschiene ist damit von den zwei Firststreifen der Unterschiene in den Randbereichen überdeckt. Diese Ausführungsform hat den Vorteil, dass bei anhebender Zugbelastung die Oberschiene an die Firststreifen der Unterschiene herangeführt wird und in Belastungsstellung die Oberschiene an den Firststreifen der Unterschiene anliegt und die Längsführung als Hebesicherung dient. Dies ist von grosser Bedeutung für den Fall eines Aufpralls des Fährzeuges, wobei die Fliehkräfte des Passagiers über die Sicherheitsgurten und die Fliehkräfte des Sitzes selbst eine anhebende Zugbelastung ausführen. Mit einer Gestaltung der Querschnitte der Unter- und Oberschiene wie vorstehend beschrieben, kann mit einfachen Profilformen ein hohes Mass an Sicherheit erzielt werden. Bei dieser Ausführungsform können als Wandteile Bereiche der Seitenwände der Unter- und Oberschiene gewählt werden. Die einander gegenüberliegenden Seitenwände der Unter- und Oberschiene bilden ein Seitenwandpaar. Innenliegend an den beiden Seitenwänden der Unterschiene und aussenliegend an den beiden Seitenwänden der Oberschiene, jeweils einander gegenüberliegend und über die Länge der Schienen laufend, können die Führungsrillen angebracht werden. Die Führungsrillen bilden beispielsweise zwei Gleitführungen, d.h. an jedem der beiden Seitenwandpaare je eine Gleitführung. Es ist auch möglich, beispielsweise an einem oder beiden Seitenwandpaaren zwei oder mehreren Gleitführungen vorzusehen. Es kann auch zwischen den Bodenflächen der Unter- und Oberschiene wenigstens ein Führungsrillenpaar wenigstens eine Gleitführung bilden. In den Gleitführungen sind die Gleitelemente, welche die tragende und führende Funktion übernehmen, angeordnet. Pro Gleitführung und pro Oberschiene können beispielsweise zwei, drei oder vier Gleitelemente angeordnet sein.

In einer anderen möglichen Ausführungsform weist die Unterschiene einen C-förmigen Querschnitt auf, wobei die Begrenzungen des Längsschlitzes durch zwei Firststreifen erfolgt. Die Oberschiene kann ein Strangpressprofil sein, welches z.B. eine im wesentlichen Y-förmige Anformung aufweist, wobei der die Y-förmige Anformung auf dem Kopf stehend im Inneren des C-förmigen Querschnittes der Unterschiene geführt ist. Als Wandteile können Bereiche der beiden Arme der Y-förmigen Anformung einerseits und die Unterseiten der beiden Firststreifen oder Schulterbereiche der Oberschiene gewählt werden. Die Wandteile sind zu einander gegenüberliegenden Führungsrillen ausgeformt. Bei dieser Gestaltung ergeben sich zwei obere Gleitführungen. In den oberen Gleitführungen sind entsprechend die Gleitelemente aufgenommen. Zwischen den Armen der Y-förmigen Anformung und gegenüberliegend in der Unterschiene können je eine Laufbahn ausgeformt sein, in denen Wälzkörper, wie z.B. Kugeln oder Rollen, angeordnet sind, oder zwischen den Armen der Y-förmigen Anformung und im Bodenbereich der Unterschiene kann statt der Laufbahn je eine weitere untere Führungsrille ausgeformt sein. Das untere Führungsrillenpaar bildet dann eine untere dritte Gleitführung. In der unteren Gleitführung sind wiederum Gleitelemente eingesetzt. In den oberen Gleitführungen sind die Gleitelemente, welche beispielsweise eine führende Funktion übernehmen, angeordnet und in der unteren Gleitführung sind Gleitelemente angeordnet, die beispielsweise eine tragende oder eine tragende und führende Funktion aufweisen, angeordnet. Pro Gleitführung und pro Oberschiene können beispielsweise zwei, drei oder vier Gleitelemente angeordnet sein.

Es ist möglich, die vorbeschriebenen Längsführungen bezüglich Unter- und Oberschiene zu vertauschen.

Die Gleitführungen werden aus der Führungsrille der Oberschiene und der Führungsrille der Unterschiene gebildet und weisen gemeinsam einen runden oder prismatischen Querschnitt auf. Die Führungsrillen können mit hochfesten Materialien ausgekleidet sein, wie z.B. Metallschichten, Keramikschichten und dergl., die eingesetzt, aufgedampft oder mit einem Hochtemperaturverfahren aufgespritzt werden können. Ein Vorteil vorliegender Längsführungen liegt jedoch darin, dass in der Regel auf die hochfesten Materialien verzichtet werden kann. Die Führungsrillen können auch mit Materialien niedrigen Reibkoeffizienten ausgekleidet oder behandelt sein.

Die Gleitelemente, die in den Gleitführungen angeordnet sind, weisen in Ruhelag einen grösseren Querschnitt, bezogen auf deren Längsachse, auf als in Einbaulage. Unter Ruhelage wird der Zustand in loser, nicht eingebauter Form verstanden.

Beispielsweise können solche Gleitelemente zwei oder mehr, z.B. drei oder vier zylindrische Körper, insbesondere gleichen Durchmessers, aufweisen, die über deren Stirnseiten mit federnden Elemente verbunden sind. In Ruhelage weisen die zylindrischen Körper parallel liegende individuelle Längsachsen auf. Der Durchmesser der zylindrischen Körper entspricht vorteilhaft etwa dem Durchmesser der Führungsrille oder der Seitenkantenlänge des prismatischen Querschnittes.

In der Einbaulage wird die Federkraft der federnden Elemente überwunden und Längsachsen der zylindrischen Körper liegen im wesentlichen alle achsgleich, eingespannt in den Gleitführungen der Ober- und Unterschiene. Aufgrund der permanenten Federkraft der federnden Elemente werden die einzelnen zylindrischen Körper gegeneinander und gegen die Wände der Führungsrillen verspannt.

Geeignete Gleitelemente können anstelle der zylindrischen Körper auch kugel- oder kegelförmige Körper oder bei Gleitführungen prismatischen Querschnitts entsprechende polygonale Körper aufweisen.

Gleitelemente anderer Art sind beispielsweise Formkörper in Gestalt von Wendelfedern.

Neben dem Gleitkörper können zur weiteren gegenseitigen Abstützung von Ober- und Unterschiene in den Führungsrillen auch Kugeln vorgesehen werden.

Bevorzugte Gleitelemente sind mit federnden Elementen verbundene zylindrische Gleitkörper. Als besonders vorteilhaft haben sich beispielsweise Gleitelemente aus drei, vier oder fünf zylindrischen Gleitkörpern, die entsprechend über zwei, drei oder vier federnde Elemente verbunden sind, erwiesen. Die federnden Elemente können beispielsweise Spiral- oder Wendelfedern sein. Bevorzugt sind als Gleitelemente einstückige Kunststoffkörper, wobei das Kunststoffmaterial zwischen den zylinderischen Körpern die federnden Elemente bildet. Bei der Herstellung derartiger Gleitelemente und in Ruhelage sind die einzelnen zylindrischen Gleitkörper in versetzten Längsachsen angeordnet und zwischen den einzelnen zylindrischen Gleitkörpern werden als federnde Elemente auf einer Mittelachse angeordnete Verbindungskörper, beispielsweise zylindrischer Form und kleineren Durchmessers als die zylinderischen Gleitkörper, vorgesehen. Solche Gleitelemente lassen sich auf einfache Art und Weise z.B. durch Spritzen oder Spritzgiessen als einstückige Formkörper herstellen oder können durch spanabhebende Verarbeitung aus Rohkörpern erzeugt werden.

Die Gleitelemente können aus Materialien, wie Kunststoffen oder Metallen oder Kombinationen der Materialien hergestellt werden. Beispiele von Kunststoffen sind Thermoplaste, wobei Polymere mit Heteroatomen in der Hauptkette bevorzugt sind. Beispiele dafür sind Polyamide, lineare Polycarbonate (Polyurethane), lineare Polyester, Polycarbonate, Polyoxymethylen (Polyacetat), Polyether und Gemische davon. Bevorzugt sind z.B. Polyamide und Polyoxymethylen. Die Kunststoffmaterialien können mit Fasern, Vliessen oder Geweben verstärkt sein.

Beispiele von Metallen sind Eisen- und Nichteisenmetalle, wie Stahl, Messing, Aluminium usw., wobei die Oberflächen beispielsweise Chromschichten, Bronzeschichten oder dergl. aufweisen können.

Die Gleitelemente können, zumindest oberflächlich oder in der Masse des Körpers eingebettet, Trockenschmierstoffe, wie z.B. Polytetrafluorethylen (Teflon), Graphit, Molybdändisulfid oder Bornitrid enthalten.

Weitere Gleitelemente, beispielsweise aus Kunststoffen, können kompressible Gleitkörper, z.B. in Tonnenform sein. Der Querschnitt solcher Gleitkörper kann rund bis oval sein und in seiner Länge kann der Gleitkörper eine, zwei oder mehrere tonnenförmige Ausbuchtungen aufweisen. Insbesondere im Bereich der tonnenförmigen Verdickung können im kompressiblen Gleitkörper Hohlräume oder schlitzförmige Durchbrüche oder Ausnehmungen angeordnet werden. In Ruhelage können die Hohlräume oder Durchbrüche gespreizt oder aufgeweitet, in Einbaulage durch die Elastizität des Gleitkörpers eingeengt sein.

Die Federkraft der Gleitelemente wirkt demnach, bezogen auf deren Längsachse, seitlich und insbesondere in allen seitlichen Ebenen. Die Federkraft ist derart, dass die Gleitelemente das Spiel zwischen Unter- und Oberschiene und der dazwischengelagerten Gleitelemente ausgleichen und eine spielfreie Lagerung gewährleisten.

Alle Gleitelemente können durch Schmierstoffe, wie Trockenschmierstoffe, wie Teflon, Graphit, Molybdändisulfid, Bornitrid oder Oele, Fette oder Pasten auf voll- oder teilsynthetischer oder mineralischer Basis geschmiert werden. Die Schmierstoffe können auch Hochdruckzusätze und andere Additive enthalten. Die Gleitelemente können an der Oberfläche oder in ihrer ganzen Ausgestaltung, Vertiefungen, Rauhigkeiten, Taschen und dergleichen aufweisen, welche einen Vorrat an Schmierstoff aufnehmen.

Die Gleitelemente können zwischen Unter- und Oberschiene in den Gleitführungen angeordnet werden, wobei vorteilhaft in jeder Gleitführung zwei, drei oder vier, gegebenenfalls mehr als vier Gleitelemente angeordnet werden. In der Regel werden die Gleitelemente an den Oberschienen, d.h. den Schienen, welche z.B. am Fahrzeugsitz festgelegt sind, befestigt. Die Befestigung kann durch Klammern, Schrauben, Nieten, Splinte und dergleichen erfolgen. Ist pro Unterschiene mehr als eine Oberschiene vorhanden, so werden vorteilhaft pro Gleitführung und pro Oberschiene zwei, drei oder vier Gleitelemente angeordnet.

Mit der erfindungsgemässen Längsführung gelingt es beispielsweise durch am Fahrzeugboden angebrachte Unterschienen und an den Fahrzeugsitzen angebrachte Oberschienen, die Fahrzeugsitze verschiebbar zu lagern. Zweckmässig werden pro verschiebbaren Fahrzeugsitz jeweils zwei Schienenpaare vorgesehen, wobei die Schienen meist im Bereich der Seitenbegrenzungen der Fahrzeugsitze angeordnet werden. Die Schienen können beispielsweise eine Länge von 0,3 bis 0,6 m aufweisen.

Es ist mit den erfindungsgemässen Längsführungen auch möglich, verhältnismässig lange Unterschienen, z.B. in einer Länge von über 0,5 bis 1,5 m vorzusehen und in dieser Unterschiene mehr als eine Oberschiene, z.B. zwei Oberschienen, zu führen. Die Oberschienen können eine Länge von z.B. 0,3 bis 0,6 m aufweisen. Damit gelingt es in Fahrzeugen z.B. zwei oder drei Sitzreihen verschiebbar zu gestalten. Diese Ausführungsform kann beispielsweise bei Kleinbussen oder Grossraumlimousinen, sogenannten Vans und dergleichen, bevorzugt eingesetzt sein. Die bei Schienen einer Länge von über z.B. 0,5 m unvermeidliche Durchbiegung bei Belastung führt nicht zu einem Verklemmen von Unter- und Oberschiene und damit zu leichter manueller Verstellbarkeit eines Fahrzeugsitzes auch unter Belastung.

In der Praxis werden die Fahrzeugsitze mit daran befestigten Oberschienen schlittenartig mit einer geringen Verspannung in die Unterschienen eingeführt. Durch die Gleitelemente, deren Zahl variiert werden kann, lässt sich die Flächenpressung gering halten. Dies ist bei Kugeln und deren punktförmiger Belastung nicht möglich. Damit kann auf hochfeste Auskleidungsmaterialien auch im Bereich von Führungsrillen und gegebenenfalls auf separate Rollkörper verzichtet werden und die Führungsrillen unterliegen kaum einem Verschleiss. Nach der erfindungsgemässen Ausführungsform berühren sich Unter- und Oberschienen vorteilhaft nicht und die Masstoleranzen zwischen den Unter- und Oberschienen werden durch die Federkraft der Gleitelemente sicher ausgeglichen und in belastetem, wie auch unbelastetem Zustande der Schienen ist eine spielfreie Lagerung gegeben.

Insbesondere können Unter- und/oder Oberschienen z.B. aus Aluminium oder dessen Legierungen gefertigt werden, wobei sich hierzu besonders Strangpressprofile anbieten.

Die lösbare Arretierung, welche ein Verschieben von Unter- und Oberschiene gegeneinander ermöglicht, kann durch gebräuchliche Vorrichtungen, wie gegenseitige Verzahnung, Rastausnehmungen und Rastnasen und dergleichen erfolgen.

Vorliegende Erfindung betrifft auch Sitzbefestigungen enthaltend die erfindungsgemässe spielfreie Längsführung. Insbesondere eignet sich die spielfreie Längsführung zur Befestigung von Sitzen am Boden oder Wänden, beispielsweise von Landfahrzeugen, wie Personenkraftwagen, Grossraumlimousinen, Kleinbussen, Reisebussen oder Omnibussen , oder in Flugzeugen.

Nachfolgende Figuren zeigen beispielhaft eine Ausführungsform einer Längsführung nach vorliegender Erfindung und Beispiele von Gleitelementen.

Figur 1 zeigt einen Querschnitt durch eine Längsführung aus Ober- und Unterschiene.

Figur 2 zeigt einen Querschnitt durch eine Längsführung aus Ober- und Unterschiene mit zusätzlichen Merkmalen.

Figuren 3 und 4 zeigen verschiedene Gleitelemente im Querschnitt und in der Draufsicht, jeweils in Ruhelage und in Einbaulage.

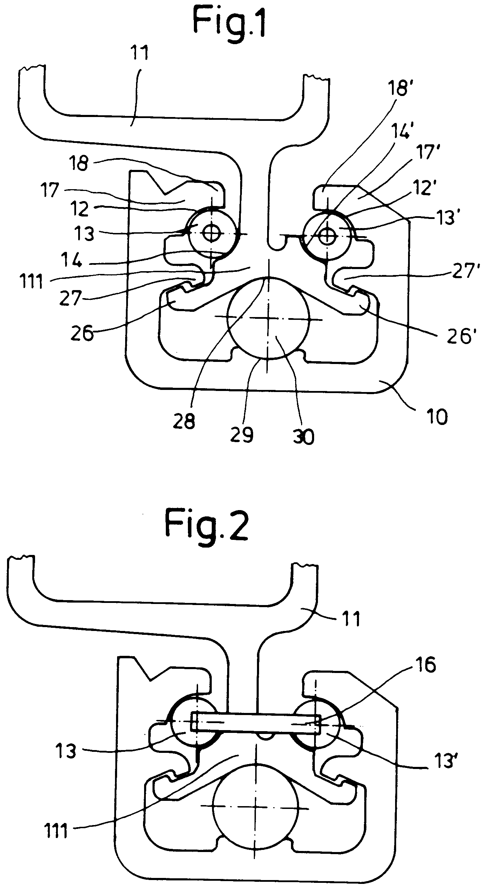

In Figur 1 ist ein im wesentlichen C-förmiges Profil zu erkennen, welches die Unterschiene 10 darstellt. Die Unterschiene 10 kann beispielsweise an einem Fahrzeugboden oder an einem Teil des Fahrzeugbodens festgelegt sein, beispielsweise durch Schrauben, Nieten, Kleben und dergleichen. Im Hohlraum des C-Profils 10 ist die Oberschiene 11 in Form eines U-Profiles mit einer Y-förmigen Anformung 111 dargestellt. Im Bereich der Firststreifen 18, 18' und der Schulter 17, 17' der Unterschiene 10 sind Führungsrillen 12, 12' und an den Armen der Y-förmigen Anformung 111 der Oberschiene 11 sind Führungsrillen 14 und 14' einander gegenüberliegend angeordnet. Die Führungsrillen 12, 12' und 14, 14' ergänzen sich zu zwei Gleitführungen runden Querschnittes. In der Gleitführung sind die Gleitelemente 13, 13' angeordnet. Verteilt auf die Länge der Oberschiene 11 können beispielsweise pro Führungsrille drei oder vier Gleitelememte vorgesehen werden, d.h. die Oberschiene 11 gleitet auf sechs oder acht Gleitelementen 13, 13' in der Unterschiene 10. Die Unterschiene 10 in Form eines C-Profiles und die Oberschiene 11 als Profil mit einer Y-förmigen Anformung 111 sind bevorzugt Strangpressprofile aus Aluminium oder dessen Legierungen. Die Arme der Y-förmigen Anformung weisen zweckmässig an ihren äusseren Enden einen Wulst 26, 26' mit einem hakenartigen Querschnitt auf. Das C-Profil der Unterschiene 10 weist zweckmässig an den inneren Seitenwänden Auskragungen 27, 27' mit hakenartigem Querschnitt auf. Im normalen Betriebszustand gleiten die Wülste 26, 26' und die Auskragungen 27, 27' in geringem Abstand aneinander vorbei. Bei anhebender Zugbelastung, wie sie beispielsweise bei einer starken Verzögerung auftreten kann, verkrallen sich die hakenartig ausgebildeten Teile der Auskragungen 27, 27' mit den Wülsten 26, 26' und verhindern zuverlässig, dass die Oberschiene 11 aus der Unterschiene 10 ausreisst.

Die Oberschiene 11 kann ebenfalls beispielsweise ein Strangpressprofil aus Aluminium oder dessen Legierungen sein. Dies kann auch ein U-Profil oder ein Hohlkammerprofil darstellen. Die Führungsrillen 12, 12', 14, 14' können gegebenenfalls auch gehärtete und/oder mit einem Festschmierstoff vorbehandelte Oberflächen aufweisen. Eine weitere Führungsrille wird durch die Vertiefung 28 zwischen den Armen der Y-förmigen Anformung 111 und einer Laufbahn 29 im Boden der Unterschiene 10 gebildet. In dieser Führungsrille können Gleitelemente 30 und/oder Wälzkörper angeordnet werden. Als Wälzkörper können Kugeln oder bei entsprechender Anpassung der Führungsrillen auch Rollen angewendet werden.

Die Figur 2 zeigt einen Schnitt durch eine Längsführung gemäss vorliegender Erfindung und wie bereits in Figur 1 dargestellt, jedoch bezogen auf die Länge der Längsführung an anderer Stelle. An dieser Stelle ist ein Haltestifte 16 sichtbar, welcher in die Y-förmige Anformung der Oberschiene 11 eingelassen ist und die Gleitelemente 13 und 13' an der Oberschiene 11 festhalten.

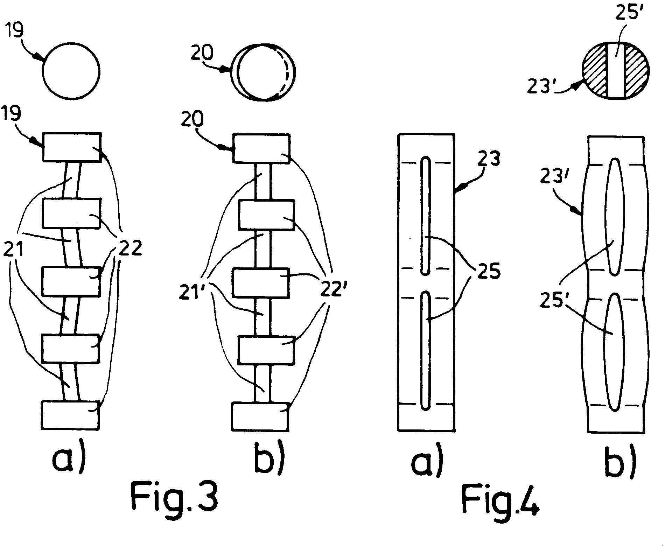

In Figur 3 a) ist ein Schnitt und eine Draufsicht auf ein Gleitelement in Einbaulage 19 dargestellt Eine Mehrzahl von zylindrischen Gleitkörpern 22, hier beispielsweise fünf, sind durch Federteile oder Stege 21 miteinander verbunden. In Einbaulage sind die zylindrischen Gleitkörper sind alle auf gleicher Achse angeordnet, um entsprechend in eine der Gleitführungen zu passen. Dadurch wird den Federteilen oder Stegen 21 eine Verformungskraft aufgezwungen. Die Figur 3 b) zeigt das Gleitelement gemäss Figur 3 a) in Ruhelage 20, d.h. die Federkraft der Federteile oder Stege 21' ist ausgeglichen, jedoch sind die zylindrischen Körper 22' auf verschiedenen parallelen Achsen angeordnet. Es ist erkennbar, dass, sobald man den Federteilen eine Kraft aufzwingt sich die Gleitkörper in der Gleitführung resp. gegenüber den Führungsrillen gegenseitig verspannen und damit die Oberschiene in der Unterschiene spielfrei geführt wird. Toleranzen und Spiel zwischen Ober- und Unterschiene werden durch die jedem Gleitelement innewohnende Federkraft ausgeglichen. Die Gleitelemente gemäss Figuren 3 können beispielsweise als Spritzguss oder Spritzkörper aus Kunststoff hergestellt werden. Die Spritzgussform erzeugt einen Körper nach Figur 3 b), d.h. ein Gleitelement in Ruhelage. Beim Einbau in die Führungsrille wirken die Stege 21, 21' als Federn und verschränken die zylindrischen Gleitkörper 22, 22' gegeneinander und insbesondere gegen die beiden Führungsrillen 12, 12', 14 und 14'. Im Bereich der Stege 21, 21' können z.B. auch Schmierstoffe wie Fette eingebracht werden und nach der Montage in der Gleitführung vermag dieses Fettpolster laufend kleinste Mengen an Schmierstoff in den Führungsrillen zu verteilen und ein sicheres Gleiten der Schienen ineinander zu gewährleisten.

Figuren 4 zeigen ein Gleitelement etwas anderer Art. Der Gleitkörper in Einbaulage 23 nach Figur 4 a) hat eine zylindrische Form mit beispielsweise zwei schlitzartigen Hohlräumen 25. Der nicht dargestellte Querschnitt in Einbaulage kann beispielsweise rund oder leicht oval sein.

In Ruhelage weist der Gleitkörper 23' gemäss Figur 4 a) eine tonnenartige Form 23' auf, wie in Figur 4 b) dargestellt. Die Hohlräume 25' haben sich durch die Elastizität des Materials des Gleitkörpers 23, 23' vergrössert. Im Querschnitt weist der Gleitkörper 23' durch die Aufweitung der Hohlräume 25' eine mehr ovale Form auf. In Einbaulage werden demnach die Hohlräume 25' kompressibel zu den schmalen Hohlräumen 25 verformt. Die Hohlräume 25, 25' können gegebenenfalls wenigstens teilweise mit einem Schmierstoff gefüllt werden.

Für den Gleitkörper 23, 23' können zweckmässig stark elastische Materialien verwendet werden. Solche Materialien sind z.B. Gummi, Hartgummi oder weiter oben genannte Thermoplaste.

Die Gleitelemente können beispielsweise einen Durchmesser von 4 bis 25 mm, vorzugsweise 5 bis 20 mm, in Einbaulage, aufweisen. In Ruhelage kann der Querschnitt sich beispielsweise um 10 bis 30 % ausweiten. Die Länge eines Gleitelementes kann beispielsweise 20 bis 80 mm, vorzugsweise 30 bis 50 mm betragen. Die Länge eines einzelnen Gleitkörpers 22, wie eines Federteiles 21, kann z.B. 3 bis 10 mm betragen. Die Unterschiene kann, wie oben erwähnt, Längen bis zu 1,5 m, vorzugsweise 0,4 bis 1,3 m aufweisen, währenddem die Oberschiene z.B. eine Länge von 0,3 bis 0,6 m haben kann. Die lichte Weite einer Unterschiene, beispielsweise eines C- oder U-Profiles kann 35 bis 50 mm betragen und die grösste Breite einer Oberschiene liegt in der Regel etwa 2 bis 4 mm unter der lichten Weite der Unterschiene, d.h. es kann beispielsweise ein Spaltmass von 1 bis 2 mm zwischen den entsprechenden Seitenwänden eingehalten werden.

Mit den spielfreien Längsführungen nach vorliegender Erfindung sind beispielsweise Fertigungstoleranzen, die insbesondere beim Zusammenstellen von Unter- und Oberschiene Auswirkungen haben, leicht ausgleichbar. So ist es möglich verhältnismässig grosse Fertigungstoleranzen bei den Unter- und Oberschienen zu akzeptieren, da diese grossen Fertigungstoleranzen durch die Gleitelemente sicher ausgeglichen werden. Die grossen Fertigungstoleranzen von Unter- und Oberschienen führen zu verringerten Herstellungskosten und vereinfachen sowohl die gegenseitige Montage der Unter- und Oberschiene, als auch die Montage der Längsführung am Fahrzeugkörper.

## Patentansprüche

1. Spielfreie Längsführung aus ineinandergeführten Schienen aus einer Unterschiene und einer gegen diese verschiebbaren Oberschiene,
dadurch gekennzeichnet, dass
die Unterschiene (10) längslaufende Wandteile aufweist, die zu einer Führungsrille (12,12') ausgeformt sind, und die Oberschiene (11) den Wandteilen der Unterschiene (10) parallel laufende Wandteile aufweist, die zu einer Führungsrille (14, 14') ausgeformt sind, und die Führungsrillen (12.12'14,14') einander gegenüberliegen und eine Gleitführung bilden und in der Gleitführung Gleitelemente (13,13') angeordnet sind, die in Ruhelage einen grösseren Querschnitt als in Einbaulage aufweisen und die Gleitelemente die Unterschiene (10) und die Oberschiene (11) spielfrei führen.

2. Längsführung nach Anspruch 1, dadurch gekennzeichnet, dass die Gleitelemente die Aufgabe des gegenseitigen Tragens und Führens der Ober- und Unterschienen allein erfüllen.

3. Längsführung nach Anspruch 1, dadurch gekennzeichnet, dass die Gleitführung, gebildet aus den Führungsrillen der Oberschiene und der Unterschiene, einen runden oder prismatischen Querschnitt aufweist.

4. Längsführung nach Anspruch 1, dadurch gekennzeichnet, dass die Gleitelemente durch elastische Spannung in Ruhelage einen grösseren Querschnitt als in Einbaulage aufweisen.

5. Längsführung nach Anspruch 1, dadurch gekennzeichnet, dass die Gleitelemente aus mehreren federnd verbundenen Gleitkörpern bestehen.

6. Längsführung nach Anspruch 1, dadurch gekennzeichnet, dass die Gleitelemente aus kompressiblen Gleitkörpern bestehen.

7. Längsführung nach Anspruch 1, dadurch gekennzeichnet, dass die Unterschiene einen C-förmigen Querschnitt aufweist.

8. Längsführung nach Anspruch 1, dadurch gekennzeichnet, dass die Unterschiene und Oberschiene je zwei Führungsrillen aufweisen, die zwei Gleitführungen ausbilden und in den Gleitführungen die Gleitelemente angeordnet sind.

9. Längsführung nach Anspruch 1, dadurch gekennzeichnet, dass die Unterschiene und die Oberschiene je drei Führungsrillen aufweisen, die zwei Gleitführungen und eine Laufbahn oder drei Gleitführungen ausbilden und in den Gleitführungen die Gleitelemente angeordnet sind.

10. Längsführung nach Anspruch 1, dadurch gekennzeichnet, dass die Unterschiene oder die Oberschiene oder die Unter- und Oberschiene Strangpressprofile sind.

11. Sitzbefestigung enthaltend eine spielfreie Längsführung nach Anspruch 1.
